# EUROPÄISCHE PATENTSCHRIFT

(11) **EP 1 323 986 B1**
(45) Veröffentlichungstag und Bekanntmachung des Hinweises auf die Patenterteilung: **19.01.2011**
(21) Anmeldenummer: 02027718.2
(22) Anmeldetag: 11.12.2002
(51) Int. Cl.: F24D 19/10, F04D 15/00

(54) **Verfahren zum Steuern einer drehregelbaren Heizungsumwälzpumpe**
Method for controlling an adjustable speed pump of a heating installation
Méthode de commande pour une pompe à vitesse réglable d'une installation de chauffage

(30) Priorität: 24.12.2001 DE 10163987
(43) Veröffentlichungstag der Anmeldung: 02.07.2003
(73) Patentinhaber: GRUNDFOS A/S, DK-8850 Bjerringbro (DK)
(72) Erfinder: Skovmose Kallesoe, Carsten, 880 Viborg (DK); Vadstrup, Pierre, 8381 Tilst (DK); Olsen, Erik, 8850 Bjerringbro (DK); Barth, Per, 8850 Bjerringbro (DK); Enevoldsen, Lars R., 8382 Hinnerup (DK); Bidstrup, Nils, 8850 Bjerringbro (DK)
(74) Vertreter: Vollmann, Heiko

(56) Entgegenhaltungen:
- EP-A- 0 664 399
- EP-A- 1 191 287
- DE-A- 3 225 141
- DE-A- 4 312 150
- DE-A- 19 525 887
- DE-A- 19 831 997
- DE-A- 19 912 588
- US-A- 4 844 334

## Beschreibung

Die Erfindung betrifft ein Verfahren zum Steuern einer drehzahlregelbaren Heizungsumwälzpumpe gemäß den im Oberbegriff des Anspruchs 1 angegebenen Merkmalen sowie eine Heizungsumwälzpumpe zur Ausführung dieses Verfahrens gemäß den im Oberbegriff des Anspruchs 22 angegebenen Merkmalen.

Bei Heizungsumwälzpumpen insbesondere für Heizungsanlagen kleiner und mittlerer Leistung, beispielsweise für Einfamilienhäuser, ist es bekannt, die Leistung der Pumpe mittels eines Stufenschalters manuell zu steuern. Wenn nicht eine regelmäßige Anpassung der Schaltstufen an die erforderliche Fördermenge bzw. die erforderliche Fördehöhe erfolgt, muss die Schaltstellung so gewählt werden, dass alle erdenklichen Leistungsfälle, also auch die von der Pumpe zu fördernde Maximalleistung abgedeckt sind. Dies führt dazu, dass das Aggregat in der meisten Zeit mit viel zu hoher Leistung gefahren wird, was innerhalb der Heizungsanlage einerseits zu Geräuschentwicklungen führen kann und darüber hinaus unnötig hohe Energiekosten bedingt.

Insofern günstiger sind Heizungspumpenaggregate mit Differenzdrucksteuerung, welche üblicherweise auf einer vorgegebenen Regelkurve betrieben werden. Derartige Heizungsumwälzpumpenaggregate sind heutzutage mit einem Drehzahlsteller gesteuert, so dass die Pumpe in jedem beliebigen Punkt eines Kennfeldes betreibbar ist. Aus der gattungsbildenden DE 195 25 887 A1 ist es bekannt, ein solches hydraulisches Leistungsfeld entsprechend den Erfordernissen der jeweiligen Heizungsanlage anzupassen, um so das Pumpenaggregat nach Möglichkeit energetisch günstig zu betreiben. Aus EP 0 736 826 B1 ist es bekannt, die Leistungssteuerung für das Pumpenaggregat temperaturabhängig zu fahren. Diese Art der Steuerung nutzt die bei modernen Heizungsanlagen vorhandene außentemperaturgeführte Steuerung der Vorlauftemperatur aus, welche in Abhängigkeit des Wärmebedarfs die Vorlauftemperatur regelt.

Allen vorgenannten Systemen gemeinsam ist, dass das Pumpenaggregat als unabhängiges Aggregat innerhalb der Heizungsanlage betrieben wird, sich also nur indirekt und bisher unzureichend an den tatsächlichen Anlagenbedarf anpassen kann. Eine exakte Abstimmung auf die heizungsanlagenseitigen Anforderungen wäre zwar möglicherweise noch durch Anbindung der Pumpensteuerung an die Heizungsanlagensteuerung/regelung möglich, dies wäre jedoch verhältnismäßig aufwändig, da es keine einheitliche Schnittstelle gibt und für jede Heizungsanlage eine gesonderte Steuerung für die Pumpe erforderlich wäre. Darüber hinaus wäre eine elektrische Verbindung zwischen Pumpenaggregat und der Heizungsanlagensteuerung/-regelung erforderlich, was den Installationsaufwand zusätzlich erhöhen würde. Schließlich könnten auch mit solch einer erweiterten Steuerung heizungsanlagenseitige Änderungen, wie sie insbesondere durch die wärmebedarfgesteuerten Thermostatventile erfolgen, ebenfalls nicht erfasst werden.

Vor diesem Hintergrund liegt der Erfindung die Aufgabe zugrunde, ein Verfahren zum Steuern einer drehzahlregelbaren Heizungsumwälzpumpe zu schaffen, bei dem das Pumpenaggregat nach wie vor unabhängig von der Heizungsanlagen- bzw. Kesselsteuerung/-regelung arbeitet, jedoch die heizungsanlagenspezifischen Charakteristika und deren Änderungen erfasst werden, um einerseits das Pumpenaggregat möglichst effizient zu betreiben, und andererseits die Anlage stets ausreichend zu versorgen. Darüber hinaus soll ein entsprechendes Pumpenaggregat mit einer solchen Steuerung/Regelung zur Verfügung gestellt werden.

Der verfahrensmäßige Teil dieser Aufgabe wird durch die Merkmale von Anspruch 1 gelöst, der vorrichtungsmäßige Teil dieser Aufgabe wird durch die in Anspruch 22 angegebenen Merkmale gelöst. Vorteilhafte Ausgestaltungen der Erfindung sind in den Unteransprüchen angegeben.

Das erfindungsmäßige Verfahren zum Steuern einer drehzahlregelbaren Heizungsumwälzpumpe gibt nicht nur eine Regelkurve für die Drehzahlregelung der Pumpe vor, sondern zeichnet sich darüber hinaus dadurch aus, dass die Regelkurve selbst in Abhängigkeit des Wärmebedarfs der Heizungsanlage selbsttätig angepaßt wird. Hierdurch kann das Regelverhalten der Pumpe im gesamten Betriebsbereich auf einem energetisch angepaßten und somit zumindest im unteren Teillastbereich energetisch sehr günstigen Niveau gehalten werden ohne Komforteinbußen anlagenseitig hinnehmen zu müssen.

Um den Wärmebedarf der Heizungsanlage zu ermitteln wird gemäß der Erfindung vorzugsweise derzeitliche Druckverlauf der Pumpe ausgewertet. Diese Daten stehen pumpenseitig zur Verfügung oder sind zumindest in an sich bekannter Weise durch Einsatz eines Druck- oder Differenzdruckaufnehmers ermittelbar. Da die Erfassung des Druckverlaufs der Pumpe durch Erfassung des Förderdrucks selbst oder der Fördermenge oder einer anderen Größe, aus der der Förderdruck ableitbar ist, erfolgt, kann das Aggregat autark arbeiten, ohne externe Sensoren oder Steuersignale zu benötigen.

Entsprechend der ermittelten Verlaufscharakteristik legt das erfindungsgemäße Verfahren dann eine Regelkurve, auf der der Betriebspunkt der Pumpe liegt, fest, die in Abhängigkeit des Wärmebedarfs selbsttätig verändert wird. Auf diese Weise kann die Pumpe energetisch besonders günstig gefahren werden, und zwar angepaßt an den jeweiligen Betriebspunkt der Heizungsanlage. Die Regelung muß also nicht wie beim Stand der Technik bekannt, an die Grenzen des Regelfeldes fahren, sondern arbeitet stets mit einer auf die herrschende Anlagensituation abgestimmten Regelkurve.

Als Maß für den Wärmebedarf der Heizungsanlage wird der Rohrnetzwiderstand herangezogen. Diese erfindungsgemäße Ausbildung berücksichtigt, dass bei modernen Heizungsanlagen die Vorlauftemperatur in Abhängigkeit der Außentemperatur gewählt ist, so dass für die pumpenseitig zu berücksichtigenden Wärmebedarf lediglich die Stellung der Thermostatventile der Heizkörper und somit der aktuelle Rohrnetzwiderstand bzw. sein zeitlicher Verlauf zu berücksichtigen ist.

Die Regelkurve, d. h. insbesondere die Steilheit der Regelkurve wird dabei gemäß der Erfindung selbsttätig von der Regelung gewählt, anhand der anlagenseitig ermittelten Erfordernisse. Dadurch, dass die Regelkurve der aktuellen Rohrnetzkennlinie sehr ähnlich sein kann, kann die hydraulische Leistung der Pumpe in nahezu idealer Weise auf die Anlagenerfordernisse abgestimmt werden, wodurch der Betrieb des Aggregats in energetisch günstigen Bereichen überhaupt erst realisierbar wird , insbesondere unter Berücksichtigung einer genauen Raumtemperaturregelung, wodurch Heizenergie eingespart wird.

Bevorzugt erfolgt eine Veränderung der Regelkurve stets dann, wenn der Betriebspunkt einen vorbestimmten Grenzpunkt auf der Regelkurve erreicht hat. Hierdurch kann erreicht werden, dass die schnelle, kurzfristige Regelung auf der jeweiligen Regelkurve erfolgt, wohingegen bei größeren, gegebenenfalls auch zeitlich längeren Änderungen die Regelkurve selbst verändert wird.

Dabei ist gemäß der Erfindung vorzugsweise vorgesehen, dass bei Erreichen eines oberen Grenzpunktes auf der Regelkurve eine flachere Regelkurve und bei Erreichen eines unteren Grenzpunktes eine steilere Regelkurve gewählt wird. Hierdurch wird sichergestellt, dass die Regelung in ihrer Grundeinstellung stets anlagenangepasst ist und dass auf der jeweiligen Regelkurve sowohl nach unten als auch nach oben verfahren werden kann und somit der volle Regelbereich zur Verfügung steht, ohne das die Gefahr besteht, dass die Pumpe in energetisch ungünstigen Bereichen betrieben wird oder die Anlage unterversorgt ist.

Zweckmäßigerweise erfolgt dabei das Wählen einer flacheren oder steileren Regelkurve nach Ermittlung eines Anlagenkennwerts, beispielsweise der sich ergebenden aktuellen Rohrnetzkennlinie oder zumindest eines Betriebspunktes auf dieser Rohrnetzkennlinie, durch dem der aktuelle Rohrnetzwiderstand definiert ist.

Um eine Änderung der Regelkurve nur dann vorzunehmen, wenn auch entsprechend anlagenseitig Änderungen erfolgen, welche einen solchen Wechsel angebracht erscheinen lassen, ist es zweckmäßig, den zeitlichen Verlauf der Betriebspunktänderung vor Erreichen des Grenzpunktes auszuwerten um auf diese Weise festzustellen, um welche Art der Änderung es sich handelt, beispielsweise um eine kurzfristige, eine mittelfristige oder eine langfristige Änderung. Entsprechend dieser Differenzierung kann dann je nach Betriebspunktänderungsverlauf eine andere Regelkurve gewählt werden oder nicht. Langfristige Änderungen sind beispielsweise die Umstellung von Sommer auf Winter, mittelfristige Änderungen sind beispielsweise die Umstellung von Tag auf Nacht und kurzfristige Änderungen sind beispielsweise das Öffnen oder Schließen eines Thermostatventils der Heizungsanlage durch manuellen Eingriff. Anhand der zeitlichen Differenzierung der Betriebspunktänderung können die vorgenannten und beispielhaft aufgeführten Ereignisse pumpenseitigen erkannt und in der Steuerung/Regelung der Pumpe entsprechend berücksichtigt werden.

Als Meßgröße zur Erfassung des zeitlichen Verlaufs der Betriebspunktänderung bietet sich insbesondere die Erfassung der Drehzahl des die Pumpe antreibenden Motors an, die beispielsweise bei Verwendung eines Frequenzumrichters ohnehin steuerelektronikseitig zur Verfügung steht, sowie des Druckes oder der Leistungsaufnahme des Motors.

Wenn dann beispielsweise der Betriebspunkt auf der Regelkurve sehr schnell nach oben wandert, so kann die Regelung hier entsprechend eingreifen und eine deutlich flachere Regelkurve wählen. Wandert der Betriebspunkt hingegen sehr langsam nach oben, so wird entweder die Regelkurve gar nicht verändert oder nur eine geringfügig flachere gewählt.

Zwar ist es ohne weiteres möglich, die hydraulischen Größen über entsprechende Sensorik zu erfassen und in elektrische umzusetzen, günstiger ist es hingegen jedoch, die aggregatseitig innerhalb der Frequenzumrichterelektronik ohnehin zur Verfügung stehenden elektrischen Werte Drehzahl und Leistung zu nutzen und darüber die hydraulischen Werte indirekt zu erfassen. Insofern kann beispielsweise der zeitliche Verlauf der Betriebspunktänderung durch Erfassung des Verlaufs der Drehzahländerung sowie der Änderung der Leistungsaufnahme des die Pumpe antreibenden Motors ermittelt werden. Hierfür ist also grundsätzlich keine gesonderte Sensorik erforderlich, diese Daten des Motors werden bei modernen Heizungsumwälzpumpenaggregaten der eingangs genannten Art ohnehin erfasst. Im Übrigen ist für das erfindungsgemäße Verfahren die Erfassung von Absolutwerten entbehrlich, es ist sogar besonders günstig, nur die relativen Veränderungen zur erfassen, da bei der elektronischen Auswertung systembedingte Meßfehler gegeneinander aufgehoben werden können.

Je nach verwendetem Motortyp kann es jedoch aufwendig sein, ausschließlich anhand der Leistungsaufnahme und der Drehzahl den aktuellen Betriebspunkt der Pumpe zu bestimmen. Dann wird man zweckmäßigerweise einen Druckmesser, vorzugsweise einen Differenzdruckmesser oder einen Durchflußmengenmesser innerhalb der Pumpe vorsehen um den Betriebspunkt anhand der Drehzahl und dieses zusätzlich ermittelten hydraulischen Wertes zu bestimmen.

Bevorzugt wird gemäß dem erfindungsgemäßen Verfahren zumindest der Förderdruck oder die Fördermenge bzw. eine Größe aus der letztere ableitbar sind kontinuierlich erfasst, wobei bei sprunghafter Änderung einer dieser Größen wie sie beispielsweise durch manuellen Eingriff an einen Thermostatventil auftritt, die Regelkurve beibehalten wird, jedoch eine über den normalen Regelverlauf (auch über den Grenzpunkt) hinausgehende Drehzahlerhöhung bzw. Absenkung erfolgt. Hierdurch wird einerseits eine stabile Regelung erreicht, welche schwingungsunanfällig ist, andererseits jedoch für eine nahezu sofortige Kompensation gesorgt und somit die Versorgung der Heizungsanlage sichergestellt.

Alternativ kann bei sprunghaften Anstieg der Fördermenge gemäß der Erfindung auch eine entsprechend flachere Regelkurve gewählt werden, beim Abfall der Fördermenge umgekehrt eine entsprechend steilere. Fällt oder steigt die Fördermenge hingegen stetig an, so wird gemäß der Erfindung vorteilhaft die aktuelle Regelkurve beibehalten. Diese Anpassungsvorgänge erfolgen selbsttätig durch die Pumpensteuerung.

Gemäß der vorliegenden Erfindung ist es nicht nur vorgesehen, durch Erfassung des Verlaufs anlagenseitiger Kennwerte oder Kennlinien anlagenseitige Ereignisse zu erfassen und die Pumpesteuerung/regelung entsprechend anzupassen, sondern gemäß der Erfindung ist darüber hinaus vorgesehen, dass die Pumpe zur Erfassung mindestens eines heizungsanlagenseitigen Kennwerts nacheinander mit mindestens zwei unterschiedlichen Drehzahlen angesteuert wird. Die Erfindung sieht also darüber hinaus vor, durch gezielte Ansteuerung der Pumpe und Auswertung der sich dann einstellenden Betriebspunkte (Förderdruck, Fördermenge) heizungsanlagenseitige Kennwerte zu erfassen, die durch eine passive Auswertung nicht verfügbar sind. Das erfindungsgemäße Verfahren sieht somit vor, dass die Pumpe gezielt Versuche fährt, um charakteristische Kennwerte der Heizungsanlage zu ermitteln.

In einfachster Form kann die Erfassung charakteristischer Kennwerte der Heizungsanlage dadurch erfolgen, dass die Pumpe zunächst mit der aktuellen Betriebsdrehzahl und nachfolgend einer deutlich erhöhten oder deutlich abgesenkten Drehzahl gefahren wird um anhand der sich dann einstellenden Betriebspunkte Anlagenkennwerte zu ermitteln. Bevorzugt wird die Pumpe jedoch mit zwei sich von der Betriebsdrehzahl unterscheidenden Drehzahlen angesteuert, von denen eine deutlich erhöht gegenüber der Betriebsdrehzahl und eine deutlich abgesenkt gegenüber der Betriebsdrehzahl ist.

Diese Drehzahlen mit denen die Pumpe angesteuert wird, werden dabei gemäß der Erfindung bevorzugt so gewählt, dass bei der niedrigen Drehzahl eine gezielte Unterversorgung und bei der höheren Drehzahl eine gezielte Überversorgung der Heizungsanlage mit Förderflüssigkeit gegeben ist. Auf diese Weise wird im Fall der Unterversorgung die Heizungsanlage ihre Thermostatventile öffnen, so dass die flachste oder zumindest eine flache Rohrnetzkennlinie bzw. zumindest ein charakteristischer Wert ermittelt werden kann. Im anderen Fall werden die Thermostatventile durch Überversorgung schließen, so dass sich die steilste oder zumindest eine steile Rohrnetzkennlinie ergibt.

Bevorzugt werden die Drehzahlen, mit denen die Pumpe angesteuert wird, gemäß der Erfindung so gewählt, dass die erste angesteuerte Drehzahl einem zu erwartenden bedarfsgerechten Betriebspunkt der Anlage entspricht. Dies kann also beispielsweise auch die akutelle Betriebsdrehzahl sein. Die nachfolgend angesteuerte Drehzahl wird dann so gewählt, dass diese insbesondere zur Anlagenanalyse geeignet ist, d. h. einen ausreichenden Abstand von dem akutellen Betriebspunkt aufweist. Mit der ersten Drehzahl wird dann quasi das normale Betriebsverhalten der Anlage simuliert während mit der zweiten Drehzahl eine möglichst steile oder möglichst flache Rohrnetzkennlinie erfaßt wird um auf diese Weise das Regelfeld, in dem die Regelkurven der Pumpenregelung liegen abzugrenzen bzw. die aktuelle Regelkurve zu bestimmen.

Gemäß einer weiteren vorteilhaften Ausbildung der Erfindung wird bei Erfassung periodischer Druckänderungen eine flachere Regelkurve gewählt, um diese Schwingungen innerhalb des Systems zu vermeiden. Solche Schwingungen, die sich als periodische Druckänderungen innerhalb der Heizungsanlage äußern, treten üblicherweise dann auf, wenn die Thermostatventile außerhalb ihres Regelbereichs arbeiten, d. h. die Heizungsanlage pumpenseitig überversorgt ist. In diesem Fall wird also durch die selbsttätige Wahl einer flacheren Regelkurve diese Überversorgung systematisch so weit abgebaut, bis sich ein normales Regelverhalten ergibt.

Das erfindungsgemäße Verfahren sieht in Weiterbildung der Erfindung vor, die Pumpe zur Ermittlung einer Durchflußsperre anzusteuern und bei Ermittlung einer solchen die Regelkurve in ihrem unteren Bereich auf einen entsprechend angehobenen Wert festzulegen. Dies erfolgt dergestalt, dass die Drehzahl der Pumpe so lange abgesenkt wird bis kein Fluidstrom mehr feststellbar ist. Wenn dies der Fall ist, bevor die Drehzahl der Pumpe Null erreichthat, ist eine solche Durchflußsperre vorhanden, die Regelkurve wird dann im unteren Bereich entsprechend angehoben, um sicherzustellen, dass die Pumpe nicht in Bereichen arbeitet in denen die Durchflußsperre noch aktiv ist. Die Ermittlung, ob eine solche Durchflußsperre vorhanden ist oder nicht, kann auch durch Auswertung der sich bei Drehzahlabsenkung ergebenden Parabel (Rohrnetzkennlinie) erfolgen oder rechnerisch ermittelt werden, in dem die Pumpe nachfolgend mit mindestens zwei unterschiedlichen Drehzahlen angesteuert wird, der sich jeweils einstellende Betriebspunkt erfaßt und anhand dieser Betriebspunkte eine Rohrnetzkennlinie ermittelt wird. Anhand des Verlaufs dieser Rohrnetzkennlinie kann dann ebenfalls ermittelt werden, ob eine Durchflußsperre im System vorhanden ist oder nicht. Wenn die rechnerisch ermittelte Rohrnetzkennlinie die Ordinate im H-Q-Diagramm mit deutlichem Abstand über dem Nullpunkt schneidet, so ist eine solche Durchflußsperre vorhanden und die Regelkurve in ihrem unteren Bereich auf einen entsprechend angehobenen Wert festzulegen, was durch die Steuerung/Regelung selbsttätig erfolgen kann.

Wird hingegen keine Durchflußsperre ermittelt, so kann die Pumpe auch in unteren Druckbereichen arbeiten und die Anlage in diesen Bereichen energetisch günstig versorgen, dies gilt insbesondere für Pumpenaggregate die mit einem Permanentmagnetmotor angetrieben werden.

Bevorzugt wird gemäß dem erfindungsgemäßen Verfahren zur Leistungssteuerung der Pumpe zusätzlich die Temperatur des zu fördernden Mediums herangezogen. Die Temperatur des zu fördernden Mediums stellt ebenfalls einen Kennwert für den Wärmebedarf der Anlage dar. Anhand der Temperatur kann darüber hinaus die in modernen Heizungsanlagen wahlweise vorgesehene Nachtabsenkung ermittelt werden. Erfolgt eine solche Nachtabsenkung der Vorlauftemperatur, so kann regelmäßig auch die Pumpenleistung abgesenkt werden.

In einer Weiterbildung des erfindungsgemäßen Verfahrens können zur Leistungssteuerung der Pumpe zusätzliche klimatische und/oder zeitliche Informationen herangezogen werden. Eine solche Variante ist insbesondere dann denkbar, wenn das Pumpenaggregat in ein digitales Informationssystem, wie beispielsweise das Internet eingebunden ist. Dann können im Aggregat zukünftig zu erwartende Änderungen, wie beispielsweise Wind oder Temperatur, die heutzutage schon recht zuverlässig im Ein- und Zweitagesbereich vorhergesagt werden können, für die Leistungssteuerung der Pumpe sowie gegebenenfalls auch der Heizungsanlage eingesetzt werden.

Um die Leistung der Pumpe möglichst optimal auf die Heizungsanlage anzupassen, müssen die vorgenannten Kennwerte möglichst häufig ermittelt, gespeichert, und die Pumpensteuerung nachfolgend angepasst werden. Soweit es um die passive Ermittlung geht, also die Erfassung von Druck, Durchflußmenge und gegebenenfalls der Temperatur kann dies im Idealfall sogar ständig erfolgen, wird jedoch aus Gründen des Speicherbedarfs der Messwerte zweckmäßigerweise nur in Intervallen erfolgen. Soweit es jedoch die aktive Erfassung von Kennwerten angeht, indem die Pumpe gezielt mit unterschiedlichen Drehzahlen angesteuert wird, um Kennwerte der Heizungsanlage zu erfassen, ist es zweckmäßig diesen Vorgang auf ein Mindestmaß zu begrenzen, da er zumindest einen Eingriff in den üblichen Heizungsanlagenbetrieb darstellt. Bevorzugt wird daher eine solche Ermittlung und Anpassung der Pumpensteuerung im Ein- oder Mehrtagesintervall erfolgen. Dabei wird der Zeitpunkt der systemanalysierenden Drehzahlsteuerung zweckmäßigerweise so gewählt, dass beispielsweise eine flache Rohrnetzkennlinie im Bereich der Nachtabsenkung ermittelt wird, wenn die Thermostatventile weitgehend geöffnet sind und eine steile Rohrnetzkennlinie dann ermittelt wird, wenn die Thermostatventile voraussichtlicht möglichst weit geschlossen sind, was typischerweise der Fall ist, wenn die Pumpe nahe dem unteren Grenzpunkt der Regelkurve gefahren wird..

Bevorzugt wird die Regelkurve für die Pumpe so gewählt, dass sie einer rohrnetzkennlinigartigen Parabel entspricht, wobei je nach Anlagenzustand, der durch das erfindungsgemäße Verfahren ermittelt wird, die Regelkurve zu einer flacheren oder steileren Rohrnetzkennlinie selbsttätig angepasst wird. Ziel und Zweck dieses Verfahrens ist es, durch entsprechende Steuerung die Pumpe so zu betreiben, dass der Ventilöffnungsgrad der Heizungsanlage möglichst konstant ist, und zwar vorzugsweise zwischen 30% und 70% vom Maximal- oder Minimalwert beträgt. Eine solche Steuerung hat den Vorteil, dass zum einen die Pumpe energetisch günstig betrieben werden kann, zum anderen eine schnelle Regelung bei sich ändernden Umgebungsbedingungen erfolgen kann. Darüber hinaus werden Strömmungsgeräusche an den Ventilen weitgehend verhindert.

Vorteilhaft ist es, wenn die Ansteuerung so erfolgt, dass beim oder nach Erreichen des oberen Grenzpunktes der Regelkurve die Pumpe zur Ermittlung einer flachen Grenzkurve - dies entspricht einer Heizungsanlage mit geöffneten Ventilen - angesteuert wird und das beim oder nach Erreichen des unteren Grenzpunktes der Regelkurve die Pumpe zur Ermittlung einer steilen Grenzkurve - dies entspricht einer Heizungsanlage mit geschlossenen Ventilen - angesteuert wird. Diese Grenzkurven entsprechen der flachsten bzw. der steilsten Rohrnetzkennlinie und begrenzen das Regelfeld. Vorteilhaft wird dann die Regelkurve in Abhängigkeit dieser beiden Grenzkurven festgelegt, wobei beim Nichterreichen einer oder beider Grenzwerte nach einer vorbestimmten Zeit die Pumpe zur Ermittlung der entsprechenden Grenzkurve angesteuert wird.

Gemäß der Erfindung wird das Pumpenaggregat so gefahren, dass sich eine mittlere Ventilstellung der Heizungsanlage ergibt, die etwa 35 % oberhalb der flachsten und 65 % unterhalb der ermittelten steilsten Rohrnetzkennlinie liegt, da sich in diesem Bereich eine nahezu ideale Kombination des energetischen Aufwandes für den durch die Heizungsanlage zu fördernden Fluidstrom, der Regelgeschwindigkeit, welche ganz entscheidend den Komfort der Heizungsanlage beeinflußt, sowie die Vermeidung von Strömungsgeräuschen an den Ventilen ergibt. Die vorgenannten Werte müssen nicht exakt eingehalten werden, es genügt, wenn die Regelkurve in einen Bereich gelegt wird, der 30 bis 40 % oberhalb der ermittelten flachsten und 60 bis 70 % unterhalb der ermittelten steilsten Rohrnetzkennlinie (Grenzkurven)liegt.

Das erfindungsgemäße Verfahren kann vollständig selbsttätig ausgeführt werden, wenn eine entsprechende Steuerung/Regelung pumpenseitig vorgesehen ist, bedarf also keinerlei Voreinstellungen.

Für die erfindungsgemäße Regelung günstig ist, dass diese mit einer Regelkurve gefahren wird, die den Betriebspunkt der Pumpe in Abhängigkeit mindestens eines anlagenseitigen Kennwertes definiert und die eine Rohrnetzkennlinienartige Parabel bildet. Gerade durch die Wahl einer solchen Regelkurve ist ein energetisch günstiger Betrieb der Pumpe über einen weiten Drehzahlbereich möglich, da die Drehzahl stets auf den akutellen Anlagenzustand abgestimmt ist. Um zu verhindern, dass die Regelkurve außerhalb des akutellen Betriebspunktes liegt, was aufgrund ihrer rohrnetzkennlinienartigen Form nicht ausgeschlossen ist, sieht die Regelung gemäß der Erfindung die selbsttätige Absenkung oder Anhebung der Regelkurve vor, wie es einleitend im Einzelnen geschildert worden ist.

Um das erfindungsgemäße Verfahren auszuführen ist gemäß der Erfindung eine elektromotorisch angetriebene Heizungsumwälzpumpe vorgesehen, die eine Steuer- und Regelelektronik aufweist, die so ausgebildet ist, dass die Pumpe in zeitlichen Abständen selbsttätig sich vom aktuellen Betriebspunkt unterscheidende Betriebspunkte anfährt um mindestens einen Kennwert des Rohrnetzes der Heizungsanlage zu ermitteln, und die anhand des ermittelten Kennwertes die Regelkurve wählt. Die Ermittlung des Kennwerts erfolgt dabei bevorzugt unmittelbar durch die Pumpe selbst oder zumindest durch Sensorik im Bereich der Pumpe. Wie bereits einleitend erläutert, sind durch die aggregatseitig in der Regel ohnehin zu Verfügung stehenden Größen wie Leistungsaufnahme und Drehzahl die hierfür wesentlichen Werte wie Fördermenge und Förderhöhe daraus ableitbar, da das Verhalten des Pumpenaggregats in Abhängigkeit der elektrischen Kennwerte des Motors und der Drehzahl hinlänglich bekannt ist. Alternativ oder zusätzlich können auch gesonderte Sensoren im Bereich des Pumpenaggregats vorgesehen sein, beispielsweise ein Differenzdurcksensor zwischen Saug- und Druckseite, ein Durchflußmengenmesser innerhalb des fluidführenden Kanals sowie ein Temperatursensor.

Um einerseits bei den Kennwert analysierenden Versuchen, welche durch die Steuerung der Pumpe gefahren werden, eine ausreichende Reaktionszeit des Heizungsanlagensystems sicherzustellen, andererseits jedoch äußere Einflüsse nach Möglichkeit auszuschalten, wird diese gezielte Drehzahlansteuerung vorzugsweise über einen Zeitraum von 1 bis 60 Minuten erfolgen. Innerhalb dieses Zeitraums werden bei gezielter Unter- oder Überversorgung der Heizungsanlage durch die Pumpe die Thermostatventile entsprechen öffnen bzw. schließen, so dass die entsprechenden anlagenseitigen Kennwerte ermittelbar sind.

Um die anlagenseitigen Kennwerte zu ermitteln reicht die Erfassung von Förderhöhe, Fördermenge und/oder Temperatur des Förderfluids in ihrem zeitlichen Verlauf allein nicht aus, es müssen vielmehr seitens der Steuer - und Regelelektronik Mittel vorgesehen sein, um die erfaßten anlagenseitigen Veränderungen entsprechenden Veränderungsmustern, die zuvor abgespeichert worden sind, zuzuordnen. Hierzu wird vorzugsweise eine Fuzzy-Logik vorgesehen, welche in der Lage ist, eine Zuordnung der erfaßten anlagenseitigen Kennwerte zu entsprechenden Veränderungsmustern zu treffen, auch wenn diese nicht identisch mit den Mustern übereinstimmen.

Um diese Erkennung durchzuführen ist es zweckmäßig, die Anlagenveränderungen zunächst zeitlich zu einzuordnen und dann mittels entsprechender logischer Filter den Veränderungsmustern zuzuordnen. Die zeitliche Einordnung erfolgt vorzugsweise in drei Kategorien, nämlich langfristigen Veränderungen (Veränderungen im Halb- bis Einjahresbereich), mittelfristigen Veränderungen (Veränderungen im Mehrtages- und Wochenbereich) und kurzfristige Veränderungen (Veränderungen im Tagesbereich). Dann können beispielsweise Sommer - Winter bedingte Veränderungen als langfristige Veränderungen identifiziert werden, Tag - Nachtveränderungen im mittelfristigen Bereich und kurzfristige Ereignisse, wie beispielsweise das Betätigen von Thermostatventilen durch manuellen Eingriff, Sonneneinstrahlung oder das Öffnen eines Fensters sowie auch periodische Schwingungen, wie sie bei Überversorgung der Anlage auftreten, ermittelt werden. Es werden mit Hilfe von zeitlicher Differenzierung der anlagenseitigen Veränderungen und nachfolgender Zuordnung von Veränderungsmustern logische Detektoren gebildet, welche zur Ermittlung heizungsanlagentypischer Veränderungen vorgesehen sind und die entsprechend den erkannten Veränderungen die Steuerung der Heizungsumwälzpumpe entsprechend anpassen, um einerseits einen energetisch möglichst günstigen Betrieb der Pumpe zu erreichen, andererseits jedoch stets die erforderliche Versorgung der Heizungsanlage sicherzustellen.

Zweckmäßigerweise wird die gesamte Steuerungs- und Regelungselektronik einschließlich derin diesem Zusammenhang erforderlichen digitalen Bausteine (Mikroprozessoren) im Klemmenkasten des Pumpenaggregats angeordnet, vorzugsweise in Baueinheit mit der übrigen Steuer- und Regelungselektronik des die Pumpe antreibenden Elektromotors bzw. dessen Drehzahlstellers. Auf diese Weise wird nicht nur eine kompakte Bauweise erreicht, sondern auch eine zusätzliche Kapselung der entsprechenden Bauteile entbehrlich, da der Klemmenkasten als solcher einen dichten Abschluss und guten mechanischen Schutz nach außen hin bildet.

Die Erfindung ist nachfolgend anhand von vier in der Zeichnung dargestellten H-Q- Diagrammen näher erläutert. Es zeigen:
- Fig. 1: ein H-Q-Diagramm eines ersten Ausführungsbeispiels,
- Fig. 2: ein H-Q-Diagramm eines zweiten Ausführungsbeispiels,
- Fig. 3: ein H-Q-Diagramm eines dritten Ausführungsbeispiels und
- Fig. 4: ein H-Q-Diagramm eines vierten Ausführungsbeispiels.

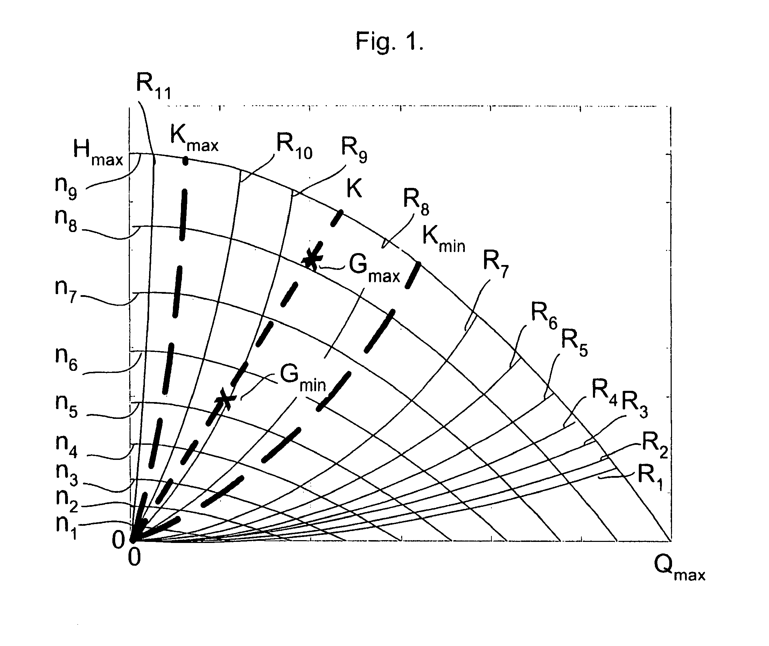

Fig. 1 zeigt ein H-Q-Diagramm einer Heizungsanlage, bei dem in üblicher Form auf der Ordinate der Druck (Förderhöhe) H und auf der Abzisse die Durchflußmenge Q durch das Rohrnetz der Heizungsanlage angegeben sind. Die Rohrnetzkennlinien sind mit R₁ bis R₁₁ beispielhaft angegeben und stellen eine Anzahl unendlich vieler Rohrnetzkennlinien Rₙ dar, die den Durchflußwiderstand druck- und mengenabhängig bei unterschiedlichem Thermostatventilöffnungsgrad repräsentieren. Die Pumpenkennlinien sind in üblicher Weise ebenfalls beispielhaft mit n₁ bis n₉ eingezeichnet, sie repräsentieren das hydraulische Leistungsfeld des eingesetzten Pumpenaggregats. Die Drehzahlen steigen von Null an von n₁ bis n₉, wobei n₉ die maximale Drehzahl und damit auch die maximale Leistung der Pumpe repräsentiert. Die Rohrnetzkennlinien steigen von der flachsten R₁ bis zur steilsten R₁₁ an.

Die Regelkurve K, welche bei der Ausführung gemäß Fig. 1 eine Gerade vom Nullpunkt bis zur Maximalkurve n₉ darstellt, ist von der Regelung selbsttätig festgelegt worden, und zwar in Abhängigkeit der rechnerisch ermittelten flachsten Rohrnetzkennlinie Kₘᵢₙ und der steilsten Rohrnetzlinie K_{max.} Wie das Ausführungsbeispiel zeigt, sind die rechnerisch ermittelten Rohrnetzkennlinien Kₘᵢₙ und Kₘₐₓ nicht die flachsten Rohrnetzkennlinien, sondern nur die flachsten von der Heizungsumwälzpumpe ermittelten. Hierzu ist die Heizungsumwälzpumpe von der Steuerung zunächst gezielt unterversorgend, d. h. beispielsweise mit einer Drehzahl n₄ angesteuert worden, bis die Thermostatventile der Heizungsanlagen aufgrund der Unterversorgung weitgehend geöffnet waren, so dass die Rohrnetzkennlinie Kₘᵢₙ rechnerisch ermittelt wurde. Die Ermittlung der flachsten Rohrnetzkennlinie erfolgt in der Nachtabsenkung, also während der Nacht, um den üblichen Betrieb der Heizungsanlage nur wenig zu stören.

In analoger Weise ist die Kₘₐₓ-Kurve ermittelt worden, in dem die Anlage mit hoher Drehzahl gezielt überversorgt wurde. Entsprechend dieser beiden rechnerisch ermittelten Rohrnetzkennlinien Kₘₐₓ und Kₘᵢₙ ist dann die Regelkurve K festgelegt worden, und zwar in einem Bereich von 60 bis 70 % unterhalb von Kₘₐₓ bzw. 30 bis 40 % oberhalb von Kₘᵢₙ. Diese Regelkurve K repräsentiert somit einen mittleren Öffnungsgrad der Ventile zwischen 60 und 70 % bezogen auf die maximal ermittelte Öffnung gemäß der errechneten Rohrnetzkennlinie Kₘᵢₙ. Dieser Öffnungsgrad der Ventile ist besonders günstig, da er einerseits eine hohe Ventilautorität und eine schnelle Regelung der Thermostatventile und damit einen hohen Komfortwert der Heizungsanlage gewährleistet, andererseits jedoch Strömungsgeräusche zuverlässig vermeidet und hinsichtlich des Durchflußwiderstandes noch günstig ist.

Die eigentliche Regelung erfolgt dann auf der Regelkurve K solange, bis nach oben hin ein Grenzwert Gₘₐₓ oder nach unten hin ein Grenzwert Gₘᵢₙ erreicht ist. Bei Erreichen des Grenzwerts Gₘₐₓ wird die Pumpe gezielt zu Ermittlung einer neuen unteren Grenzkurve Kₘᵢₙ mit abgesenkter Drehzahl angesteuert, wohingegen bei Erreichen des Grenzpunktes Gₘᵢₙ die Pumpe gezielt mit erhöhter Drehzahl zur Ermittlung einer neuen Grenzkurve Kₘₐₓ angesteuert wird. Dann wird die Regelkurve K entsprechend angepaßt, um die Heizungsanlage mit dem vorgenannten bevorzugten Ventilöffnungsgrad von 60 bis 70 % betreiben zu können.

Im Übrigen erfolgt die Drehzahlregelung auf der Regelkurve K, wobei zum Beispiel dann, wenn die Anlage von einem Schnittpunkt zwischen der Pumpenkennlinie n ₇ und K ausgehend sich öffnet, d. h. der Wärmebedarf der Anlage aufgrund sich öffnender Thermostatventile steigt, die Drehzahl n₇ zunächst beibehalten wird, bis sich ein neuer Betriebspunkt einstellt bzw. bis ein vorgegebenes Zeitintervall überschritten ist. Dann wird ermittelt, welche Durchflußmenge die Anlage in diesem neuen Betriebspunkt benötigt und nachfolgend die Pumpe mit einer Drehzahl angesteuert, welche dem Schnittpunkt der ermittelten Durchflußmenge mit der Regelkurve K entspricht.

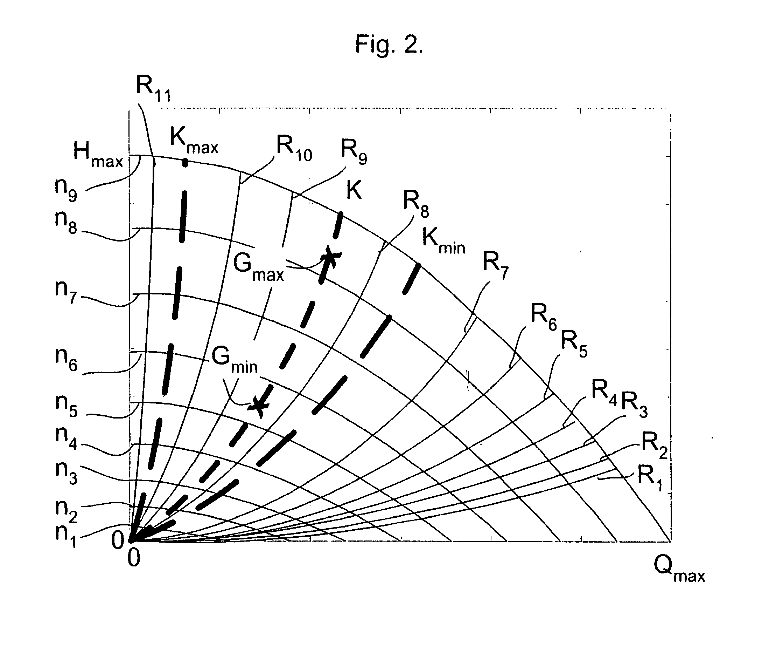

Fig. 2 zeigt eine H-Q-Diagramm wie es anhand von Fig. 1 vorbeschrieben worden ist mit dem Unterschied, dass die Regelkurve K keine Grade, sondern eine rohrnetzkennlinienartige Parabel ist. Wie die Fig. 2 deutlich zeigt, gliedert sich die Kurve K zwischen die Rohrnetzkennlinien R₈ und R ₉ ein, sie stellt somit über den gesamten Regelbereich einen konstanten Ventilöffnungsgrad sicher.

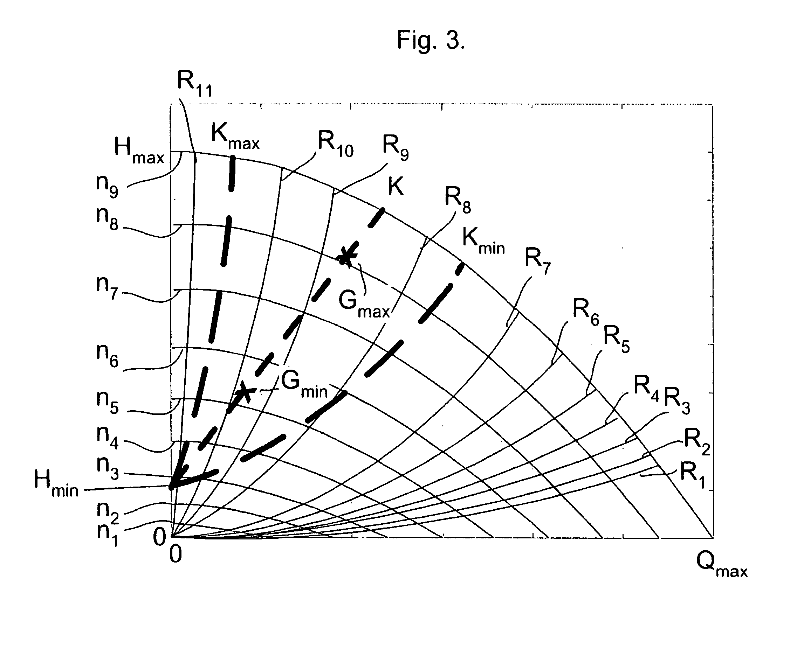

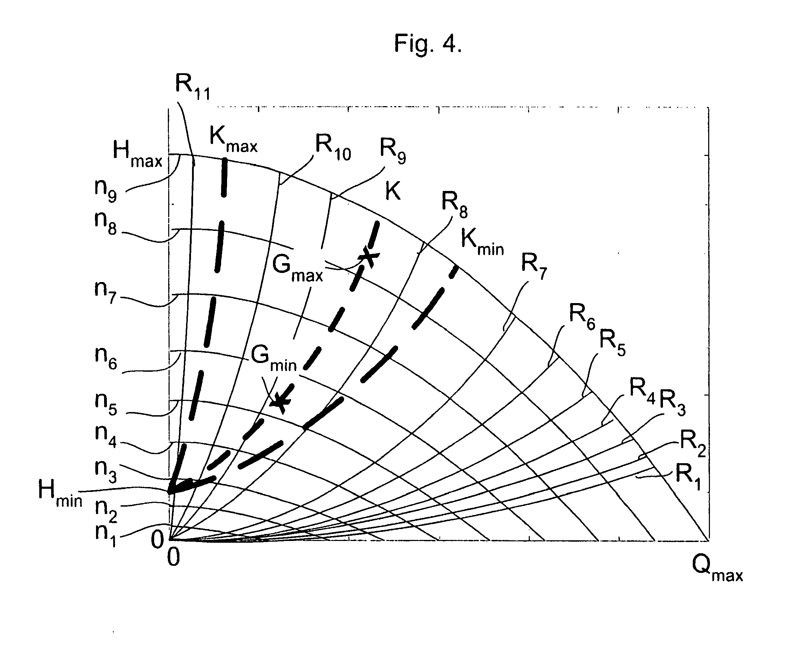

Die anhand der Fig. 3 und 4 dargestellten Ausführungsbeispiele unterscheiden sich von den vorbeschrieben dadurch, dass die Regelkurven sowie die Minimal- und Maximalkurve Kₘᵢₙ und Kₘₐₓ nicht bei Null beginnen, sondern bei einer zwischen den Drehzahlen n₂ und n₃ liegenden minimalen Förderhöhe Hₘᵢₙ. Im Übrigen entspricht die Fig. 3 der Darstellung nach Fig. 1 und die Fig. 4 der Darstellung nach Fig. 2.

Bei den anhand den Fig. 3 und 4 dargestellten Heizungsanlage ist von der Regelung eine Durchflußsperre ermittelt worden, weshalb die Regelkurve K bei einer Mindestförderhöhe Hₘᵢₙ beginnt und nicht im Nullpunkt. Hierdurch wird sichergestellt, dass die Ansteuerung der Pumpe stets so erfolgt, dass eine Drehzahl gewählt wird, die einen Mindestförderdruck, nämlich Hₘᵢₙ überschreitet und somit die in der Anlage detektierte Durchflußsperre überwindet. Auch wenn der in den Fig. 3 und 4 eingezeichnete untere Grenzpunkt Gₘᵢₙ deutlich über diesem Bereich liegt, so sind doch auch Drehzahlabsenkungen unter Gₘᵢₙ min möglich, die nicht zur Ermittlung einer neuen Kₘₐₓ führen, wenn eine überproportionale Regelung über Gₘᵢₙ hinaus nach unten erforderlich ist. In diesem Bereichen der Regelkurve kann somit sichergestellt werden, dass eine wenn auch geringe Förderung erfolgt, die nicht durch die Durchflußsperre unterbrochen wird.

## Patentansprüche

1. Verfahren zum Steuern einer drehzahlregelbaren Heizungsumwälzpumpe, bei dem die Drehzahl der Pumpe längs einer Regelkurve (K) veränderbar ist und die Regelkurve (k) in Abhängigkeit des Wärmebedarfs der Heizungsanlage selbsttätig angepasst wird, **dadurch gekennzeichnet, dass** als Maß für den Wärmebedarf der Rohrnetzwiderstand (R) der Heizungsanlage herangezogen wird und dass die Pumpe zur Ermittlung einer flachen und einer steilen Rohrnetzkennlinie (Kₘₐₓ und Kₘᵢₙ) nacheinander mit mindestens zwei unterschiedlichen Drehzahlen (n) angesteuert wird und die Regelkurve (K) anhand dieser ermittelten Rohrnetzkennlinien festgelegt wird.

2. Verfahren nach Anspruch 1, **dadurch gekennzeichnet, dass** die Drehzahlen (n) so gewählt sind, dass bei der niedrigeren Drehzahl eine Unterversorgung und bei der höheren Drehzahl eine Überversorgung der Heizungsanlage gegeben ist.

3. Verfahren nach Anspruch 1, **dadurch gekennzeichnet, dass** die erste angesteuerte Drehzahl einem zu erwartenden bedarfsgerechten Betriebspunkt der Anlage entspricht und die nachfolgend angesteuerte Drehzahl so gewählt ist, dass eine zur Anlagenanalyse geeignete Abweichung vom vorherigen Betriebspunkt gegeben ist

4. Verfahren nach einem der vorhergehenden Ansprüche, **dadurch gekennzeichnet, dass** der Wärmebedarf der Heizungsanlage durch Auswertung des zeitlichen Druckverlaufs der Pumpe ermittelt wird.

5. Verfahren nach einem der vorhergehenden Ansprüche, **dadurch gekennzeichnet, dass** die Regelkurve (K) dann selbsttätig verändert wird, wenn der Betriebspunkt einen vorbestimmten Grenzpunkt (G) auf der Regelkurve (K) erreicht hat.

6. Verfahren nach Anspruch 4 **dadurch gekennzeichnet, dass** bei Erreichen eines oberen Grenzpunktes (Gₘₐₓ) auf der Regelkurve eine flachere Regelkurve und dass bei Erreichen eines unteren Grenzpunktes (Gₘᵢₙ) eine steilere Regelkurve gewählt wird.

7. Verfahren nach einem der vorhergehenden Ansprüche, **dadurch gekennzeichnet, dass** vor dem Wählen einer flacheren oder steileren Regelkurve (K) ein Anlagenkennwert ermittelt wird.

8. Verfahren nach einem der Ansprüche 4 bis 6, **dadurch gekennzeichnet, dass** für die Wahl einer flacheren oder steileren Regelkurve (K) der zeitliche Verlauf der Betriebspunktänderung vor Erreichen des Grenzpunktes (G) ausgewertet wird.

9. Verfahren nach Anspruch 7, **dadurch gekennzeichnet, dass** zur Erfassung des zeitlichen Verlaufs der Betriebspunktänderung der Verlauf der Drehzahländerung der Pumpe bzw. der diese antreibenden Motors ausgewertet wird.

10. Verfahren nach einem der vorhergehenden Ansprüche, **dadurch gekennzeichnet, dass** zumindest der Förderdruck oder die Fördermenge oder eine Größe aus der letztere ableitbar sind, kontinuierlich erfasst werden und dass bei sprunghafter Änderung die Regelkurve zu einer steileren oder flacheren Regelkurve hin geändert wird.

11. Verfahren nach einem der vorhergehenden Ansprüche, **dadurch gekennzeichnet, dass** zumindest der Förderdruck oder die Fördermenge oder eine Größe aus der letztere ableitbar sind, kontinuierlich erfasst werden und dass bei sprunghafter Änderung des Förderdrucks die Regelkurve beibehalten wird, jedoch eine über den normalen Regelverlauf hinausgehende Drehzahlerhöhung bzw. -absenkung erfolgt.

12. Verfahren nach einem der vorhergehenden Ansprüche, **dadurch gekennzeichnet, dass** bei stetigem Anstieg oder Abfall des Förderdrucks die aktuelle Regelkurve (K) beibehalten wird.

13. Verfahren nach einem der vorhergehenden Ansprüche, **dadurch gekennzeichnet, dass** zumindest der Förderdruck oder die Fördermenge oder eine Größe, aus der letztere ableitbar sind, erfasst und zur anlagenabhängigen Steuerung der Heizungsumwälzpumpe herangezogen wird,

14. Verfahren nach einem der vorhergehenden Ansprüche, **dadurch gekennzeichnet, dass** nach der Ermittlung einer periodischen Druckänderung eine flachere Regelkurve (K) gewählt wird.

15. Verfahren nach einem der vorhergehenden Ansprüche, **dadurch gekennzeichnet, dass** die Pumpe zur Ermittlung einer Durchflusssperre angesteuert wird, und dass bei Ermittlung einer Durchflusssperre das Kennfeld der Pumpe in diesem Bereich gesperrt wird.

16. Verfahren nach einem der vorhergehenden Ansprüche, **dadurch gekennzeichnet, dass** zur Leistungssteuerung zusätzlich die Temperatur oder der Temperaturverlauf des zu fördernden Mediums herangezogen wird,

17. Verfahren nach einem der vorhergehenden Ansprüche, **dadurch gekennzeichnet, dass** zur Leistungssteuerung zusätzliche klimatische und/oder zeitliche Informationen herangezogen werden.

18. Verfahren nach einem der vorhergehenden Ansprüche, **dadurch gekennzeichnet, dass** die Ermittlung mindestens eines heizungsanlagenseitigen Kennwertes und die nachfolgende Anpassung der Pumpensteuerung im Ein- oder Mehrtagesintervall wiederholt wird.

19. Verfahren nach einem der vorhergehenden Ansprüche, **dadurch gekennzeichnet, dass** eine Regelkurve (K) gewählt wird, die eine rohrnetzkennlinienartige Parabel ist und etwa der aktuellen Rohrnetzkennlinie entspricht (Fig. 2).

20. Verfahren nach einem der vorhergehenden Ansprüche, **dadurch gekennzeichnet, dass** beim oder nach Erreichen des oberen Grenzpunktes (Gₘₐₓ) der Regelkurve (K) die Pumpe zur Ermittlung einer flachen Grenzkurve (Gₘᵢₙ) angesteuert wird und dass beim oder nach Erreichen des unteren Grenzpunktes (Gₘᵢₙ) der Regelkurve die Pumpe zur Ermittlung einer steilen Grenzkurve (Kₘₐₓ) angesteuert wird, wobei beim Nichterreichen einer oder beider Grenzwerte (G) nach einer vorbestimmten Zeit die Pumpe zur Ermittlung der entsprechenden Grenzkurve angesteuert wird.

21. Verfahren nach einem der vorhergehenden Ansprüche, **dadurch gekennzeichnet, dass** die Ansteuerung der Pumpe zur Ermittlung einer flachen und einer steilen Rohrnetzkennlinie im Abstand von Tagen wiederholt wird.

22. Elektromotorisch angetriebene Heizungsumwälzpumpe mit einer Steuer- und Regelelektronik zum Ausführen des Verfahrens nach einem der vorhergehenden Ansprüche, **dadurch gekennzeichnet, dass** die Steuer- und Regelelektronik so ausgebildet ist, dass die Pumpe in zeitlichen Abständen selbsttätig sich vom aktuellen Betriebspunkt unterscheidende Betriebspunkte anfährt um Kennwerte des Rohrnetzes der Heizungsanlage zu ermitteln und anhand der ermittelten Kennwerte die Regelkurve (K) selbsttätig zu wählen.

23. Heizungsumwälzpumpe nach Anspruch 22, **dadurch gekennzeichnet, dass** Mittel zum Erfassen von Druck, vorzugsweise dem Differenzdruck zwischen Saugseite und Druckseite, Durchflussmenge und/oder Temperatur des Fördermediums vorgesehen sind.

24. Heizungsumwälzpumpe nach Anspruch 22 oder 23, **dadurch gekennzeichnet, dass** die Ansteuerung mit sich vom aktuellen Betriebspunkt unterscheidenden Drehzahlen über einen Zeitraum von einer bis dreißig Minuten erfolgt.

25. Heizungsumwälzpumpe nach einem der Ansprüche 22 bis 24, **dadurch gekennzeichnet, dass** die Steuer- und Regelelektronik Mittel zum Bestimmen anlagenseitiger Veränderungen und zum Zuordnen dieser Veränderungen zu einer vorgegebenen Zahl von Veränderungsmustern aufweist.

26. Heizungsumwälzpumpe nach einem der Ansprüche 22 bis 25, **dadurch gekennzeichnet, dass** die Steuer- und Regelelektronik Mittel zum zeitlichen differenzieren der ermittelten anlageseitigen Veränderungen aufweist.

27. Heizungsumwälzpumpe nach einem der Ansprüche 22 bis 26, **dadurch gekennzeichnet, dass** Mittel vorgesehen sind, die anlagenseitige Veränderungen in vorzugsweise drei Kategorien einteilen, nämlich in lang-, mittel- und kurzfristige Veränderungen.

28. Heizungsumwälzpumpe nach einem der Ansprüche 22 bis 27, **dadurch gekennzeichnet, dass** die Steuer- und Regelelektronik vorzugsweise als Baueinheit im Klemmenkasten des Aggregats angeordnet ist.

## Claims

1. A method for controlling a heating circulation pump which may be controlled with a closed loop with regard to its rotational speed, with which the rotational speed of the pump may be changed along a closed-loop control curve (K) and the closed-loop control curve (K) is automatically adapted in dependence on the heat requirement of the heating installation, **characterised in that** the pipe network resistance (R) of the heating installation is used as a measure for the heat requirement, and that the pump, for determining a flat and a steep pipe network characteristic curve (Kₘₐₓ and Kₘᵢₙ), is activated successively with at least two different rotational speeds (n), and the closed-loop control curve (K) is ascertained by way of these determined pipe network characteristic curves.

2. A method according to claim 1, **characterised in that** the rotational speeds (n) are selected such that with the lower rotational speed, an undersupply, and with the higher rotational speed, an over-supply of the heating installation is given.

3. A method according to claim 1, **characterised in that** the first activated rotational speed corresponds to an expected, need-based operating point of the installation and the subsequently activated rotational speed is selected such that a deviation from the previous operating point is given, said deviation being suitable for installation analysis

4. A method according to one of the preceding claims, **characterised in that** the heat requirement of the heating installation is determined by way of evaluation of the temporal pressure course of the pump.

5. A method according to one of the preceding claims, **characterised in that** the closed-loop control curve (K) is changed automatically when the operating point has reached a defined limit point (G) on the closed-loop control curve (K).

6. A method according to claim 4, **characterised in that** one selects a flatter closed-loop control curve on reaching an upper limit point (Gₘₐₓ) on the closed-loop control curve, and one selects a steeper closed-loop control curve on reaching a lower limit point (Gₘᵢₙ).

7. A method according to one of the preceding claims, **characterised in that** one determines an installation characteristic value before the selection of a flatter or steeper closed-loop control curve (K).

8. A method according to one of the claims 4 to 6, **characterised in that** the temporal course of the operating point change before reaching the limit point (G) is evaluated for the selection of a flatter or a steeper closed-loop control curve (K).

9. A method according to claim 7, **characterised in that** the course of the rotational speed change of the pump or of the motor driving this, is evaluated for detecting the temporal course of the operating point change.

10. A method according to one of the preceding claims, **characterised in that** at least the delivery pressure or the delivery quantity or a variable from these, may be derived, continuously detected and that with erratic changes, the closed-loop control curve is changed towards a steeper or a flatter closed-loop control curve.

11. A method according to one of the preceding claims, **characterised in that** at least the delivery pressure or the delivery quantity or a variable from these, may be derived, continuously detected and with an erratic change of the delivery pressure, the closed-loop control curve is retained, but a rotational speed increase or rotational speed reduction, which go beyond the normal closed-loop control course, is effected.

12. A method according to one of the preceding claims, **characterised in that** the current closed-loop control curve (K) is retained with a constant increase or reduction of the delivery pressure.

13. A method according to one of the preceding claims, **characterised in that** at least the delivery pressure or the delivery quantity or a variable from the latter may be derived, detected and used for the installation-dependent control of the heating circulation pump.

14. A method according to one of the preceding claims, **characterised in that** a flatter closed-loop control curve (K) is selected after determining a periodic pressure change.

15. A method according to one of the preceding claims, **characterised in that** the pump is activated for determining a throughput block, and that when determining a throughput block, the characteristic field of the pump is blocked in this region.

16. A method according to one of the preceding claims, **characterised in that** additionally, the temperature or the temperature course of the medium to be delivered is used for the power control.

17. A method according to one of the preceding claims, **characterised in that** additional climatic and/or temporal information is used for power control.

18. A method according to one of the preceding claims, **characterised in that** the determining of at least one characteristic value on the heating installation side, and the subsequent adaptation of the pump control, is repeated in a single-day interval or multi-day interval.

19. A method according to one of the preceding claims, **characterised in that** a closed-loop control curve (K) is selected, which is a pipe-network-characteristic-curve-like parabola and corresponds roughly to the current pipe network characteristic curve (Fig. 2).

20. A method according to one of the preceding claims, **characterised in that** on or after reaching the upper limit point (Gₘₐₓ) of the closed-loop control curve (K), the pump is activated for determining a flat limit curve (Gₘᵢₙ) and that on or after reaching the lower limit point (Gₘᵢₙ) of the closed-loop control curve, the pump is activated for determining a steep limit curve (Kₘₐₓ), wherein on not reaching one or both limit values (G) after a predefined time, the pump is activated for determining the respective limit curve.

21. A method according to one of the preceding claims, **characterised in that** the activation of the pump for determining a flat and a steep pipe network characteristic line, is repeated in an interval of days.

22. An electromotorically driven heating circulation pump with control and regulation electronics for carrying out the method according to one of the preceding claims, **characterised in that** the control and regulation electronics are designed such that the pump in temporal intervals automatically runs to operating points which are different to the current operating point, in order to determine characteristic values of the pipe network of the heating installation and to automatically select the closed-loop control curve (K) by way of the determined characteristic values.

23. A heating circulation pump according to claim 22, **characterised in that** means for detecting pressure, preferably the differential pressure between the suction side and the pressure side, throughput quantity and/or temperature of the delivery medium, are provided.

24. A heating circulation pump according to claim 22 or 23, **characterised in that** the activation with rotational speeds which are different from the current operating point, is effected over a time period of one to thirty minutes.

25. A heating circulation pump according to one of the claims 22 to 24, **characterised in that** the control and regulation electronics comprise means for determining installation-side changes and for assigning these changes to a predefined number of change patterns.

26. A heating circulation pump according to one of the claims 22 to 25, **characterised in that** the control and regulation electronics comprise means for the temporal differentiation of the determined installation-side changes.

27. A heating circulation pump according to one of the claims 22 to 26, **characterised in that** means are provided which divide up the installation-side changes into preferably three categories, specifically in long-term, medium-term and short-term changes.

28. A heating- circulation pump according to one of the claims 22 to 27, **characterised in that** the control and regulation electronics is preferably arranged as a construction unit in the terminal box of the assembly.

## Revendications

1. Procédé de commande d'une pompe de circulation de chauffage à vitesse réglable d'une installation de chauffage, dans lequel la vitesse de la pompe est modifiable selon une courbe de réglage (K) et la courbe de réglage (K) est adaptée automatiquement en fonction de la demande de chaleur de l'installation de chauffage, **caractérisé en ce que** la résistance (R) du réseau de conduites de l'installation de chauffage est utilisée comme mesure pour la demande de chaleur et **en ce que** la pompe est commandée successivement à au moins deux vitesses (n) différentes pour déterminer une courbe caractéristique du réseau de conduites douce et une courbe caractéristique du réseau de conduites abrupte (Kₘₐₓ et Kₘᵢₙ), et **en ce que** la courbe de réglage (K) est définie sur la base de ces courbes caractéristiques du réseau de conduites déterminées.

2. Procédé selon la revendication 1, **caractérisé en ce que** les vitesses (n) sont choisies de façon à obtenir, dans le cas de la vitesse inférieure, une sous-alimentation et, dans le cas de la vitesse supérieure, une suralimentation de l'installation de chauffage.

3. Procédé selon la revendication 1, **caractérisé en ce que** la première vitesse commandée correspond à un point de fonctionnement de l'installation prévisible en fonction de la demande et la vitesse commandée suivante est choisie de façon à obtenir un écart par rapport au point de fonctionnement précédent, qui soit conforme à l'analyse de l'installation.

4. Procédé selon l'une des revendications précédentes, **caractérisé en ce que** la demande de chaleur de l'installation de chauffage est déterminée par évaluation de l'évolution dans le temps de la pression de la pompe.

5. Procédé selon l'une des revendications précédentes, **caractérisé en ce que** la courbe de réglage (K) varie automatiquement lorsque le point de fonctionnement a atteint un point limite (G) prédéterminé sur la courbe de réglage (K).

6. Procédé selon la revendication 4, **caractérisé en ce qu'**à l'atteinte d'un point limite supérieur (Gₘₐₓ) sur la courbe de réglage une courbe de réglage plus douce est choisie et **en ce qu'**à l'atteinte d'un point limite inférieur (Gₘᵢₙ), une courbe de réglage plus abrupte est choisie.

7. Procédé selon l'une des revendications précédentes, **caractérisé en ce qu'**une valeur caractéristique de l'installation est déterminée avant la sélection d'une courbe de réglage (K) plus douce ou plus abrupte.

8. Procédé selon l'une des revendications 4 à 6, **caractérisé en ce que**, pour la sélection d'une courbe de réglage (K) plus douce ou plus abrupte, l'évolution dans le temps de la variation du point de fonctionnement est évaluée avant atteinte du point limite (G).

9. Procédé selon la revendication 7, **caractérisé en ce que** l'évolution de la variation de vitesse de la pompe ou du moteur entraînant celle-ci est évaluée pour détecter l'évolution dans le temps de la variation du point de fonctionnement.

10. Procédé selon l'une des revendications précédentes, **caractérisé en ce qu'**au moins la pression de refoulement ou le débit ou une grandeur permettant d'en déduire ceux-ci, est détecté(e) en continu et **en ce qu'**en cas de variation brusque, la courbe de réglage est modifiée en une courbe de réglage plus abrupte ou plus plane.

11. Procédé selon l'une des revendications précédentes, **caractérisé en ce qu'**au moins la pression de refoulement ou le débit ou une grandeur permettant d'en déduire ceux-ci, est détecté(e) en continu et **en ce qu'**en cas de variation brusque de la pression de refoulement, la courbe de réglage est maintenue, mais il s'opère une augmentation ou une diminution de la vitesse hors de la courbe de réglage normale.

12. Procédé selon l'une des revendications précédentes, **caractérisé en ce qu'**en cas de montée ou chute constante de la pression de refoulement, la courbe de réglage (K) en cours est conservée.

13. Procédé selon l'une des revendications précédentes, **caractérisé en ce qu'**au moins la pression de refoulement ou le débit ou une grandeur permettant d'en déduire ceux-ci, est détecté(e) et utilisé(e) pour la commande de la pompe de circulation de chauffage en fonction de l'installation de chauffage.

14. Procédé selon l'une des revendications précédentes, **caractérisé en ce qu'**une courbe de réglage (K) plus douce est choisie après détermination d'une variation de pression périodique .

15. Procédé selon l'une des revendications précédentes, **caractérisé en ce que** la pompe est commandée pour déterminer un blocage de débit, et **en ce que**, lors de la détermination d'un blocage de débit, le champ caractéristique de la pompe est bloqué dans cette plage.

16. Procédé selon l'une des revendications précédentes, **caractérisé en ce que** la température ou la courbe de température du fluide à pomper est utilisée, en outre, pour la commande de puissance.

17. Procédé selon l'une des revendications précédentes, **caractérisé en ce que** des données climatiques et/ou temporelles supplémentaires sont utilisées pour la commande de puissance.

18. Procédé selon l'une des revendications précédentes, **caractérisé en ce que** la détermination d'au moins une valeur caractéristique côté installation de chauffage et l'adaptation subséquente de la commande de la pompe sont répétées à intervalles d'un ou plusieurs jours.

19. Procédé selon l'une des revendications précédentes, **caractérisé en ce qu'**est choisie une courbe de réglage (K) qui est une parabole du type courbe caractéristique d'un réseau de conduites et correspond sensiblement à la courbe caractéristique du réseau de conduites en cours (Fig. 2).

20. Procédé selon l'une des revendications précédentes, **caractérisé en ce qu'**à l'atteinte ou après atteinte du point limite supérieur (Gₘₐₓ) de la courbe de réglage (K), la pompe est commandée pour détermination d'une courbe limite douce (Gₘᵢₙ) et **en ce qu'**à l'atteinte ou après atteinte du point limite inférieur (Gₘᵢₙ) de la courbe de réglage, la pompe est commandée pour détermination d'une courbe limite abrupte (Kₘₐₓ), et si l'une ou les deux valeurs limites (G) ne sont pas atteintes après un temps prédéterminé, la pompe est commandée pour détermination de la courbe limite correspondante.

21. Procédé selon l'une des revendications précédentes, **caractérisé en ce que** la commande de la pompe pour détermination d'une courbe caractéristique du réseau de conduites douce ou d'une courbe caractéristique du réseau de conduites abrupte est répétée à plusieurs jours d'intervalle.

22. Pompe de circulation de chauffage commandée par moteur électrique, comprenant un dispositif électronique de commande et de régulation pour la réalisation du procédé selon l'une des revendications précédentes, **caractérisée en ce que** le dispositif électronique de commande et de régulation est conçu de façon que la pompe approche automatiquement, par intervalles de temps, des points de fonctionnement différents du point de fonctionnement en cours, pour déterminer des valeurs caractéristiques du réseau de conduites de l'installation de chauffage et choisir automatiquement la courbe de réglage (K) à partir des valeurs caractéristiques déterminées.

23. Pompe de circulation de chauffage selon la revendication 22, **caractérisée en ce que** sont prévus des moyens de détection de la pression, de préférence de la pression différentielle entre le côté aspiration et le côté refoulement, du débit et/ou de la température du fluide à pomper.

24. Pompe de circulation de chauffage selon la revendication 22 ou 23, **caractérisée en ce que** la commande à des vitesses différentes du point de fonctionnement en cours s'effectue sur un laps de temps de une à trente minutes.

25. Pompe de circulation de chauffage selon l'une des revendications 22 à 24, **caractérisée en ce que** le dispositif de commande et de régulation électronique comporte des moyens pour déterminer des variations côté installation et pour associer ces variations à un nombre prédéterminé de modèles de variation.

26. Pompe de circulation de chauffage selon l'une des revendications 22 à 25, **caractérisée en ce que** le dispositif de commande et de régulation électronique comporte des moyens de différenciation dans le temps des variations déterminées côté installation.

27. Pompe de circulation de chauffage selon l'une des revendications 22 à 26, **caractérisée en ce que** sont prévus des moyens qui classent les variations côté installation de préférence en trois catégories, notamment en variations à long terme, à moyen terme et à court terme.

28. Pompe de circulation de chauffage selon l'une des revendications 22 à 27, **caractérisée en ce que** le dispositif de commande et de régulation électronique est disposé de préférence sous forme de module dans la boite à bornes du groupe moto-pompe.
